# EUROPÄISCHE PATENTANMELDUNG

(11) **EP 2 136 273 A2**
(43) Veröffentlichungstag der Anmeldung: **23.12.2009**
(21) Anmeldenummer: 09006692.9
(22) Anmeldetag: 19.05.2009
(51) Int. Cl.: G05B 9/03, G05B 19/042

(54) **Verfahren zur Steuerung einer Windenergieanlage**

(30) Priorität: 16.06.2008 DE 102008028568
(71) Anmelder: Nordex Energy GmbH, 22848 Norderstedt (DE)
(72) Erfinder: Jurkat, Mark, 22844 Norderstedt (DE)
(74) Vertreter: Hauck Patent- und Rechtsanwälte

(57) **Zusammenfassung**

Die Erfindung betrifft ein Verfahren zur Steuerung einer Windenergieanlage mit mehreren Steuerungseinheiten, die Steuerungsaufgaben innerhalb der Windenergienanlage ausführen, umfassend die folgenden Schritte:
a) den Steuerungseinheiten wird abhängig von den durch sie auszuführenden Steuerungsaufgaben jeweils eine Priorität zugeordnet,
b) die Steuerungseinheiten kommunizieren während des Betriebs der Windenergieanlage fortlaufend miteinander und/oder mit einer zentralen Kommunikationseinheit,
c) sofern ein Defekt einer ersten Steuerungseinheit der Windenergieanlage eintritt, übernimmt eine zweite Steuerungseinheit der Windenergieanlage die Steuerungsaufgaben der defekten Steuerungseinheit, wobei die zweite Steuerungseinheit abhängig von der ihr zugehörigen Priorität ausgewählt wird und die gleiche oder eine niedrigere Priorität besitzt als die defekte Steuerungseinheit.

## Beschreibung

Die Erfmdung betrifft ein Verfahren zur Steuerung einer Windenergieanlage mit mehreren Steuerungseinheiten, die Steuerungsaufgaben innerhalb der Windenergieanlage ausführen. Für den Betrieb einer Windenergieanlage können eine zentrale oder mehrere dezentrale Steuerungseinheiten vorgesehen sein. So können beispielsweise dezentrale Steuereinheiten vorgesehen sein für die Blatteinstellwinkelsteuerung (Pitch-Steuerung), eine Haupt-Umrichter-Steuerung, eine Azimutwinkelsteuerung, eine Kühlsystemsteuerung, eine Schmierungssteuerung usw. Optional kann beispielsweise auch ein Condition-Monitoring-System (CMS) vorgesehen sein, welches rechtzeitig einen erforderlichen Wartungseinsatz feststellen soll.

Aus DE 103 00 174 B3 ist eine Windenergieanlage mit mehreren Komponenten bekannt, die jeweils Sensoren und/oder Aktoren besitzen und ein Steuergerät aufweisen. Dabei sind die Steuergeräte mit einem Datennetz verbunden. Über dieses Datennetz können die Steuergeräte untereinander Signale zu Betriebszuständen der jeweils gesteuerten Komponenten, Sensorwerte und/oder Steuersignale für andere Komponenten austauschen. Es wird bei der bekannten Windenergieanlage also auf eine zentrale Steuerung verzichtet. Vielmehr erfolgt die Steuerung auf Basis der einzelnen Komponenten. Bei dieser komponentenbasierten Steuerung der Windenergieanlage erfolgt die Kommunikation zwischen den Komponenten unabhängig von spezifischen Parametern. Ein Vorteil dieser Vorgehensweise ist, dass ohne großen Aufwand Komponenten unterschiedlicher Hersteller ausgetauscht werden können.

Ein Problem ergibt sich, wenn ein Defekt einer Steuerungseinheit auftritt. In einem solchen Fall können die von der Steuerungseinheit auszuführenden Steuerungsaufgaben unter Umständen nicht mehr ausgeübt werden. Dies kann den Betrieb der Windenergieanlage beeinträchtigen.

Ausgehend von dem erläuterten Stand der Technik liegt der Erfindung daher die Aufgabe zugrunde, ein Verfahren der eingangs genannten Art bereitzustellen, bei dem die Verfügbarkeit der Windenergieanlage und ihrer Komponenten jederzeit gegeben ist.

Diese Aufgabe wird gemäß der Erfindung durch die Gegenstände der unabhängigen Ansprüche 1 und 11 gelöst. Vorteilhafte Ausgestaltungen finden sich in den abhängigen Ansprüchen sowie der Beschreibung und den Figuren.

Gemäß einem ersten Aspekt der Erfmdung wird die Aufgabe durch ein Verfahren der eingangs genannten Art gelöst, umfassend die folgenden Schritte:
a) den Steuerungseinheiten wird abhängig von den durch sie auszuführenden Steuerungsaufgaben jeweils eine Priorität zugeordnet,
b) die Steuerungseinheiten kommunizieren während des Betriebs der Windenergieanlage fortlaufend miteinander und/oder mit einer zentralen Kommunikationseinheit,
c) sofern ein Defekt einer ersten Steuerungseinheit der Windenergieanlage eintritt, übernimmt eine zweite Steuerungseinheit der Windenergieanlage die Steuerungsaufgaben der defekten Steuerungseinheit, wobei die zweite Steuerungseinheit abhängig von der ihr zugeordneten Priorität ausgewählt wird und die gleiche oder eine niedrigere Priorität besitzt als die defekte Steuerungseinheit.

Die Steuerungseinheiten dienen erfindungsgemäß zur Steuerung unterschiedlicher Komponenten der Windenergieanlage. So kann es sich beispielsweise um eine Blatteinstellwinkelsteuerung (Pitch-Steuerung), eine Haupt-Umrichter-Steuerung, eine Azimutwinkelsteuerung, eine Kühlsystemsteuerung, eine Schmierungssteuerung usw. handeln. Optional kann auch ein CMS vorgesehen sein. Die Steuerungseinheiten können Teil von Steuerungssystemen sein mit Ein- und/oder Ausgabebaugruppen, welche mit den für das jeweilige System erforderlichen Aktoren und/oder Sensoren verbunden sind. Jedes System kann eine oder mehrere Steuerungseinheiten aufweisen. Grundsätzlich können die Steuerungseinheiten neben einer Steuerung selbstverständlich auch eine Regelung ausführen.

Gemäß dem ersten Aspekt der Erfindung werden den Steuerungseinheiten unterschiedliche Prioritäten zugeordnet. Die Prioritäten werden abhängig von der Bedeutung der von den Steuerungseinheiten jeweils auszuführenden Steuerungsaufgaben für den Betrieb der Windenergieanlage vergeben. So ist beispielsweise ein CMS nicht unbedingt für den Betrieb der Windenergieanlage erforderlich. Im Fall eines Defekts einer für den Betrieb der Anlage wichtigeren Steuerungseinheit kann also beispielsweise die Steuerungseinheit des CMS die Aufgaben der defekten Steuerungseinheit übernehmen. Es ist somit sichergestellt, dass im Rahmen der zur Verfügung stehenden Steuerungskapazität die wichtigsten Steuerungsaufgaben der Windenergieanlage jederzeit ausgeführt werden. Die Steuerungseinheiten kommunizieren dabei fortlaufend miteinander, z.B. zyklisch in regelmäßigen Abständen. Sie können dabei z.B. Daten auf dezentrale Speicher (Flash-Speicher) der anderen Steuerungseinheiten schreiben oder einer zentralen Kommunikationseinheit mitteilen. Im Rahmen der Kommunikation übermitteln die Steuerungseinheiten z.B. ihren jeweiligen Status. Sie können allerdings auch beispielsweise Mess- und/oder Steuerdaten, Einstellungen usw. übermitteln. Die zentrale Kommunikationseinheit kann eine Mastersteuerung sein mit einem oder mehreren Masterservern. Durch die Kommunikation beziehen die Steuerungen von der zentralen Kommunikationseinheit oder direkt von den anderen Steuerungseinheiten die Verfügbarkeit der anderen Steuerungseinheiten und können sich somit bei Auftritt eines Defekts eigenständig oder von der zentralen Kommunikationseinheit gesteuert umkonfigurieren, um Steuerungsaufgaben einer anderen Steuerungseinheit zu übernehmen. In dem vorliegenden Zusammenhang liegt ein Defekt einer Steuerungseinheit (z.B. ein Ausfall) vor, wenn diese nicht mehr an der Kommunikation teilnimmt.

Die die Steuerungsaufgaben der defekten Steuerungseinheit übernehmende Steuerungseinheit besitzt dabei die gleiche oder eine niedrigere Priorität als die defekte Steuerungseinheit. Dadurch kommt es beispielsweise in dem Fall, dass die Steuerungseinheit, die die Aufgaben der defekten Steuerungseinheit übernimmt, ihre eigenen Steuerungsaufgaben anschließend nicht mehr ausführen kann, zu keinem Ausfall wichtigerer Steuerungsaufgaben als die der defekten Steuerungseinheit. Bei einer niedrigeren Priorität der die Steuerungsaufgaben der defekten Steuerungseinheit übernehmenden Steuerungseinheit fallen dann nur für den Betrieb der Windenergieanlage weniger wichtige Steuerungsaufgaben aus. Es ist somit sichergestellt, dass im Rahmen der zur Verfügung stehenden Steuerungskapazität die wichtigsten Steuerungsaufgaben der Windenergieanlage jederzeit ausgeführt werden. Es kann vorteilhaft sein, wenn die die Steuerungsaufgaben der defekten Steuerungseinheit übernehmende Steuerungseinheit die niedrigste zu vergebende Priorität besitzt. Es ist dann bei einem Ausfall mehrerer Steuerungseinheiten nur eine minimale Änderung der Zuordnung von Steuerungsaufgaben erforderlich.

Die Auswahl der für die defekte Steuerungseinheit "einspringenden" Steuerungseinheit kann automatisch erfolgen, beispielsweise durch die zentrale Kommunikationseinheit bewirkt werden oder aufgrund einer vorher festgelegten Reihenfolge erfolgen. Die Auswahl kann aber auch manuell durch eine Bedienperson erfolgen. Die zentrale Kommunikationseinheit kann für die Verteilung der Steuerungsaufgaben Priorisierungsvorschriften besitzen.

Sobald die defekte Steuerungseinheit wieder funktionstüchtig ist, übernimmt sie wieder ihre Aufgaben und die zuvor ihre Aufgaben temporär übernehmende Steuerungseinheit führt wieder ihre eigenen Aufgaben oder Steuerungsaufgaben einer anderen ausgefallenen Steuerungseinheit durch. Auf diese Weise kann ein sukzessives Wiederaufnehmen von Steuerungsaufgaben nach Priorität erfolgen.

Das erfindungsgemäße Verfahren erhöht die Verfügbarkeit von Steuerungssystemen in einer Windenergieanlage durch eine intelligente redundante Aufgabenverteilung. Dabei können wichtige defekte Einzelsystemsteuerungen temporär ersetzt werden, sei dies durch Reservesteuerungen oder auch von Nebensystemen, so dass jederzeit sichergestellt ist, dass wichtige Aufgaben ausgeführt werden. Das Verfahren eignet sich daher insbesondere für schwer erreichbare Windenergieanlagen, beispielsweise Offshore-Windenergieanlagen.

Die Kommunikation zwischen den Steuerungen und mit der zentralen Kommunikationseinheit erfolgt bevorzugt über eine Bus-Technologie. Diese kann z.B. über Funk, LWL (Lichtwellenleiter) oder auch elektrisch mit verschiedenen Protokolltechniken, wie Ethernet, Profinet, Ethercat usw. betrieben werden. Dabei kann das benötigte Protokollmedium jeder Steuerungseinheit in einem Windenergieanlagennetzwerk zur Verfügung stehen. Die entsprechende Hardware muss dann für die eingesetzten Protokolle/Bus-Systeme ausgelegt sein.

Gemäß einer Ausgestaltung kann die zweite Steuerungseinheit vor der Übernahme der Steuerungsaufgaben der defekten Steuerungseinheit eigene Steuerungsaufgaben ausgeführt haben. Nach der Übernahme der Steuerungsaufgaben der defekten Steuerungseinheit ist es möglich, dass die zweite Steuerungseinheit die zuvor ausgeführten eigenen Steuerungsaufgaben weiterhin ausführt. In diesem Fall kann die Steuerungseinheit also mehrere Aufgaben gleichzeitig ausführen, z.B. zwei oder mehr. Es kommt dann zu keinem Ausfall von Steuerungstätigkeiten. Es ist aber auch möglich, dass die zweite Steuerungseinheit nach der Übernahme der Steuerungsaufgaben der defekten Steuerungseinheit die zuvor ausgeführten eigenen Steuerungsaufgaben nicht mehr ausführt. Es ist dann denkbar, dass eine dritte Steuerungseinheit der Windenergieanlage die Steuerungsaufgaben der zweiten Steuerungseinheit übernimmt. Die dritte Steuerungseinheit kann die Steuerungsaufgaben der zweiten Steuerungseinheit zusätzlich zu ihren eigenen Aufgaben aufnehmen oder anstelle von eigenen Aufgaben. In jedem Fall kann durch die sukzessive Weiterverteilung der Steuerungsaufgaben die Verfügbarkeit der Windenergieanlagensteuerung weiter erhöht werden. Insbesondere wenn die dritte Steuerungseinheit die Steuerungsaufgaben der zweiten Steuerungseinheit anstelle der eigenen Aufgaben ausführt, kann die dritte Steuerungseinheit wiederum abhängig von der ihr zugeordneten Priorität ausgewählt werden und die gleiche oder eine niedrigere Priorität besitzen als die zweite Steuerungseinheit. Es ist dann wiederum sichergestellt, dass lediglich für die Windenergieanlage weniger bedeutende Steuerungsaufgaben ausfallen.

Die zweite Steuerungseinheit kann auch eine Ersatzsteuerungseinheit sein, die vor Übernahme der Steuerungsaufgaben der defekten Steuerungseinheit keine eigenen Steuerungsaufgaben ausgeführt hat. Es wird also eine Reservesteuerungseinheit vorgehalten, die nur zur Übernahme der Aufgaben von defekten Steuerungseinheiten dient. Es ist dann sichergestellt, dass es im Fall eines Defekts einer Steuerungseinheit nicht zu einem Ausfall von Steuerungsaufgaben der Windenergieanlage kommt.

Um sicherzustellen, dass bei weiteren Ausfällen von Steuerungseinheiten eine bereits für eine höher priorisierte Steuerungseinheit eingesprungene Steuerungseinheit nicht zur Übernahme weiterer, möglicherweise niedriger priorisierter Steuerungsaufgaben herangezogen wird und somit möglicherweise ihre höher priorisierten Steuerungsaufgaben der zuerst defekten Steuerungseinheit nicht mehr ausführen kann, kann einer Steuerungseinheit nach der Übernahme der Steuerungsaufgaben einer anderen Steuerungseinheit mit höherer Priorität so lange die höhere Priorität der anderen Steuerungseinheit zugeordnet werden, wie sie die Steuerungsaufgaben der anderen Steuerungseinheit ausführt.

Gemäß einem zweiten Aspekt der Erfindung wird die Aufgabe durch ein Verfahren der eingangs genannten Art gelöst, umfassend die folgenden Schritte:
a) die Steuerungseinheiten kommunizieren während des Betriebs der Windenergieanlage fortlaufend miteinander und/oder mit einer zentralen Kommunikationseinheit,
b) sofern ein Defekt einer ersten Steuerungseinheit der Windenergieanlage eintritt, übernimmt eine zweite Steuerungseinheit der Windenergieanlage, die zuvor eigene Steuerungsaufgaben ausgeführt hat, die Steuerungsaufgaben der defekten Steuerungseinheit, wobei die zweite Steuerungseinheit abhängig davon ausgewählt wird, ob sie eine ausreichende Kapazität zur Ausführung der Steuerungsaufgaben der defekten Steuerungseinheit zusätzlich zu ihren eigenen Steuerungsaufgaben besitzt, und die zweite Steuerungseinheit nachfolgend sowohl ihre eigenen Steuerungsaufgaben als auch die Steuerungsaufgaben der defekten Steuerungseinheit aufführt.

Bezüglich des zweiten Aspekts der Erfindung gilt das bereits zum ersten Aspekt der Erfindung Gesagte in analoger Weise. Im Unterschied zu dem ersten Aspekt der Erfmdung muss bei dem zweiten Aspekt jedoch keine Priorisierung der Steuerungseinheiten erfolgen (selbstverständlich können den Steuerungseinheiten aber auch Prioritäten zugeordnet werden, wie beim ersten Aspekt der Erfindung). Die Auswahl der die Steuerungsaufgaben der defekten Steuerungseinheit übernehmenden Steuerungseinheit erfolgt bei diesem Aspekt der Erfindung danach, ob diese eine ausreichende Kapazität besitzt, um sowohl ihre eigenen Steuerungsaufgaben als auch die Steuerungsaufgaben der defekten Steuerungseinheit auszuführen. Sofern also dennoch eine Priorisierung der Steuerungseinheiten erfolgt, kann die die Aufgaben der defekten Steuerungseinheit übernehmende Steuerungseinheit auch eine höhere Priorität besitzen als die defekte Steuerungseinheit. Bei diesem Aspekt der Erfindung ist somit gewährleistet, dass auch bei einem Ausfall einer Steuerungseinheit noch alle Steuerungsaufgaben der Windenergieanlage ausgeführt werden können.

Gemäß einer weiteren Ausgestaltung der Erfmdung kann mindestens eine Steuerungseinheit mindestens ein Steuerungsprogramm zur Ausführung der Steuerungsaufgaben mindestens einer anderen Steuerungseinheit der Windenergieanlage aufweisen. Einige Steuerungseinheiten der Windenergieanlage können grundsätzlich das gleiche Steuerungsprogramm aufweisen, das lediglich anders parametriert ist. Andere Steuerungseinheiten können dagegen unterschiedliche Steuerungsprogramme aufweisen. Damit dennoch im Fall eines Defekts einer Steuerungseinheit gewährleistet ist, dass eine andere möglicherweise ein unterschiedliches Programm aufweisende Steuerungseinheit die defekte Steuerungseinheit ersetzen kann, muss der "einspringenden" Steuerungseinheit das Steuerungsprogramm der defekten Steuerungseinheit zur Verfügung gestellt werden. Insbesondere werden dabei das Aufgabengebiet, das Programm, Sensor-/ Aktoradressen sowie Betriebsparameter einmalig und/oder zyklisch, manuell und/oder automatisiert, zentral und/oder dezentral gespeichert. Bei dieser Ausgestaltung der Erfindung können beispielsweise in jeder Steuerungseinheit sämtliche oder bestimmte Steuerungsprogramme anderer Steuerungseinheiten, insbesondere einer oder mehrerer höher priorisierter Steuerungseinheiten, zusätzlich zu dem jeweils eigenen Steuerungsprogramm vorgehalten werden.

Alternativ ist es möglich, dass die Steuerungseinheiten ein Steuerungsprogramm zur Ausführung der Steuerungsaufgaben einer anderen Steuerungseinheit nach Bedarf von einer zentralen Kommunikationseinheit abrufen, bevor sie die Steuerungsaufgaben der anderen Steuerungseinheit übernehmen. Auch können sie das Programm von einer anderen Steuerungseinheit, beispielsweise einer zentralen Windenergieanlagensteuerungseinheit, abrufen.

Wenn die Steuerungseinheiten mit einer zentralen Kommunikationseinheit kommunizieren, kann diese die Zuordnung der Steuerungsaufgaben zu den Steuerungseinheiten im Falle eines Defekts einer Steuerungseinheit durchführen. Die zentrale Kommunikationseinheit kann durch eine zentrale Windenergieanlagensteuerungseinheit gebildet sein. Sie kann aber auch eine von den Steuerungseinheiten separate Steuerungseinheit bilden. Die Kommunikationseinheit übernimmt die Verteilung der Steuerungsaufgaben auf die Steuerungseinheiten, insbesondere also die Entscheidung, welche Steuerungseinheit im Fall eines Defekts die Aufgaben der defekten Steuerungseinheit übernimmt. Dazu kann sie Priorisierungsvorschriften, beispielsweise eine Priorisierungstabelle, aufweisen. Zur Weiterbildung der Redundanz kann auch die zentrale Kommunikationseinheit mehrfach und damit redundant vorgesehen sein.

Gemäß einer alternativen Ausgestaltung können die Steuerungseinheiten miteinander kommunizieren und die Zuordnung der Steuerungsaufgaben zu den Steuerungseinheiten kann im Falle eines Defekts einer Steuerungseinheit automatisch entsprechend einer vorher festgelegten Reihenfolge erfolgen. Bei dieser Ausgestaltung muss also keine Kommunikation über eine zentrale Kommunikationseinheit erfolgen. Vielmehr erfolgt eine automatische Koordination der Aufgaben, wobei die Steuerungseinheiten selbst über die Aufgabenverteilung entscheiden. Dazu kann zuvor eine geeignete Reihenfolge der Steuerungseinheiten festgelegt werden.

Selbstverständlich können beide Aspekte der Erfindung mit sämtlichen ihrer Ausgestaltungen miteinander kombiniert werden.

Ein Ausführungsbeispiel der Erfindung wird nachfolgend anhand von Figuren näher erläutert. Es zeigen:
- Figur 1: eine schematische Darstellung einer Windenergieanlage mit mehreren Steuerungseinheiten, und
- Figur 2: eine weitere schematische Darstellung der Windenergieanlage aus Figur 1.

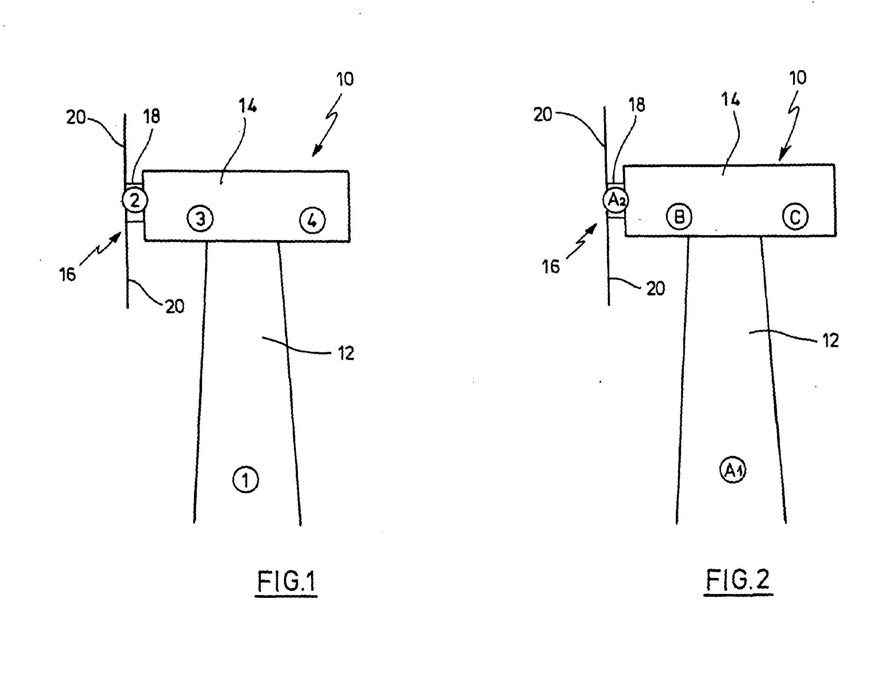

Soweit nichts anderes bestimmt ist, bezeichnen in den Figuren gleiche Bezugszeichen gleiche Gegenstände. In Figur 1 ist eine Windenergieanlage 10 dargestellt. Sie besitzt in bekannter Weise einen Turm 12, auf dem eine Gondel 14 drehbar um die Längsachse des Turms 12 gelagert ist. Die Gondel 14 trägt einen Rotor 16 mit einer Rotornabe 18 und Rotorblättern 20, im vorliegenden Fall drei Rotorblättern 20.

In Figur 1 sind mehrere Steuerungseinheiten der Windenergieanlage 10 schematisch dargestellt. Am Turmfuß befindet sich eine Steuerungseinheit 1 zur Hauptumrichtersteuerung. Im Bereich der Rotornabe 18 befindet sich eine Steuerungseinheit 2 zur Steuerung des Blatteinstellwinkels der Rotorblätter 20 (Pitch-Steuerung). Weiterhin dargestellt ist eine Steuerungseinheit 3 zur Steuerung der Schmiermittelversorgung eines Azimutantriebs zum Drehen der Gondel 14 auf dem Turm 12. Schließlich ist eine Steuerungseinheit 4 eines Condition-Monitoring-Systems (CMS) gezeigt. Die Steuerungseinheiten 1, 2, 3, 4 führen unterschiedliche Steuerungsaufgaben durch, deren Bedeutung für den Betrieb der Windenergieanlage unterschiedlich ist. Insbesondere ist die Hauptumrichtersteuerung durch die Steuerungseinheit 1 eine besonders wichtige Steuerung, da ohne sie die gesamte Windenergieanlage 10 nicht betrieben werden kann. Ebenso wichtig ist die Steuerungsaufgabe der Steuerungseinheit 2 zur Einstellung des Blatteinstellwinkels. Fällt diese aus, können die Einstellwinkel der Rotorblätter 20 nicht mehr eingestellt werden, und ein sicherer Betrieb der Anlage 10 ist nicht mehr gewährleistet. Die Steuerungseinheit 3 für die Azimutschmierung ist dagegen von geringerer Bedeutung, da bei einem Ausfall dieser die Windenergieanlage 10 zumindest für einen gewissen Zeitraum noch betrieben werden kann. Das Condition-Monitoring-System mit der Steuerungseinheit 4 ist für den Betrieb der Windenergieanlage von der geringsten Bedeutung, da sie lediglich dazu dient, Wartungseinsätze frühzeitig zu erkennen.

Entsprechend werden den Steuerungseinheiten 1, 2, 3, 4 Prioritäten gemäß der Bedeutung ihrer Steuerungsaufgaben für den Betrieb der Windenergieanlage zugeordnet. Dies ist in Figur 2 schematisch dargestellt. So erhalten die Steuerungseinheiten 1 bzw. 2 die höchsten und gleich hohen Prioritäten A1 bzw. A2. Die Steuerungseinheit 3 erhält eine niedrigere Priorität B und die Steuerungseinheit 4 die niedrigste Priorität C.

Die nachfolgende Tabelle veranschaulicht das erfindungsgemäße Verfahren:

| | **Steuerungen** | | | | | |
|---|---|---|---|---|---|---|
| **Zeitliche Reibenfolge** | **1** | **2** | **3** | **4** | **Aufgabe/ Programmnicht ausführbar** | **Ereignis** |
| **1** | A1 | A2 | B | C | - | |
| **2** | X | A2 | B | A1 | C | **Steuerung 1:** Ausfall **Steuerung 4:** Aufgabe mit Priorität A1 übernehmen, Aufgabe C nicht berücksichtigen |
| **3** | X | X | A2 | A1 | B, C | **Steuerung 2**: Ausfall **Steuerung 3:** Aufgabe mit Priorität A2 übernehmen, wenn Schmierung nicht unbedingt notwendig |
| **4** | A1 | X | B | A2 | C | **Steuerung 1**: wieder verfügbar **Steuerung 3:** übernimmt die ursprüngliche Aufgabe mit Priorität B **Steuerung 4:** Aufgabe mit Priorität A2 übernehmen |
| **5** | A1 | A2 | B | C | - | **Steuerung 2:** wieder verfügbar **Steuerung 2:** übernimmt die ursprüngliche Aufgabe mit Priorität A2 **Steuerung 4:** übernimmt die ursprüngliche Aufgabe mit Priorität C |

Dabei ist in der ersten Spalte eine zeitliche Reihenfolge verschiedener Ereignisse 1 bis 5 dargestellt, wobei die kleinste Zahl das erste zeitliche Ereignis darstellt und die höchste Zahl das letzte zeitliche Ereignis. In den weiteren Spalten 2 bis 5 sind die verschiedenen Steuerungen 1, 2, 3 und 4 der Windenergieanlage 10 aufgeführt. Zu den verschiedenen Zeitpunkten 1 bis 5 sind in den Spalten 2 bis 5 der Tabelle jeweils die von den Steuerungseinheiten 1 bis 4 ausgeführten Steuerungsaufgaben unterschiedlicher Prioritäten A1, A2, B und C dargestellt. Ein X in einer Tabellenzelle zeigt an, dass die in der zugehörigen Spalte vorgesehene Steuerungseinheit ihre Aufgabe aufgrund eines Defekts nicht mehr ausführen kann. In der nächsten Spalte sind solche Steuerungsaufgaben bzw. Steuerungsprogramme aufgeführt, die zu bestimmten Zeitpunkten bzw. bei bestimmten Ereignissen, wie in der letzten Spalte aufgeführt, von keiner Steuerungseinheit mehr ausgeführt werden können.

Während des Betriebs der Windenergieanlage kommunizieren die Steuerungseinheiten 1, 2, 3, 4 fortlaufend miteinander und/oder mit einer zentralen Kommunikationseinheit (nicht dargestellt). Im dargestellten Beispiel erfolgt die Kommunikation zyklisch in Zeitabständen von beispielsweise wenigen Sekunden. Im Rahmen der Kommunikation übermitteln die Steuerungseinheiten unter anderem ihren jeweiligen Status. Auf diese Weise sind die Steuerungseinheiten 1, 2, 3, 4 jederzeit über die Funktionsfähigkeit der anderen Steuerungseinheiten 1, 2, 3, 4 unterrichtet. Sofern ein Defekt einer Steuerungseinheit 1, 2, 3, 4 auftritt, wird dies von den anderen Steuerungseinheiten 1, 2, 3, 4 oder der zentralen Kommunikationseinheit festgestellt und die Steuerungsaufgaben der defekten Steuerungseinheit können entsprechend auf andere Steuerungseinheiten 1, 2, 3, 4 übertragen werden.

Die Entscheidung über die Koordination der Steuerungsaufgaben kann entweder durch einen menschlichen Bediener erfolgen oder automatisch durch vorgegebene Prioritätsmuster oder selbstlernende Optimierungsfunktionen beispielsweise von einer zentralen Kommunikationseinheit vorgenommen werden. Sofern die einspringende Steuerungseinheit das Steuerungsprogramm der defekten Steuerungseinheit alternativ oder zusätzlich zu dem eigenen in ihren Speicher nachlädt, erhält sie weiterhin die erforderlichen letzten Einstellungen der defekten Steuerungseinheit, wie den Parametersatz sowie etwaige Sensoren- und Aktorenadressen, und kann dann das Steuerungsprogramm der defekten Steuerungseinheit starten. Fällt vorliegend zum Zeitpunkt 2 die Steuerungseinheit 1 aus, übernimmt die Steuerungseinheit 4 mit der geringsten Priorität die Steuerungsaufgaben der Steuerungseinheit 1 mit der Priorität A1. Entsprechend können die Steuerungsaufgaben mit der Priorität C nicht mehr ausgeführt werden. Fällt im Weiteren auch die Steuerungseinheit 2 aus (Zeitpunkt 3), übernimmt die Steuerungseinheit 3 mit der geringeren Priorität B die Steuerungsaufgaben der Steuerungseinheit 2 mit der Priorität A2. Entsprechend können die Steuerungsaufgaben mit den Prioritäten B und C nicht mehr ausgeführt werden. Sofern zum Zeitpunkt 4 die Steuerungseinheit 1 wieder verfügbar ist, übernimmt sie wieder ihre Steuerungsaufgaben mit der Priorität A1. Entsprechend kann die Steuerungseinheit 3 wieder ihre Steuerungsaufgaben mit der Priorität B aufnehmen und die Steuerungseinheit mit der niedrigsten Priorität (Steuerungseinheit 4) übernimmt die ausgefallenen Steuerungsaufgaben mit der nächsthöheren Priorität. Zum Zeitpunkt 5 sind wieder sämtliche Steuerungseinheiten 1, 2, 3, 4 verfügbar, so dass sämtliche Steuerungsaufgaben ordnungsgemäß ausgeführt werden.

## Patentansprüche

1. Verfahren zur Steuerung einer Windenergieanlage mit mehreren Steuerungseinheiten, die Steuerungsaufgaben innerhalb der Windenergieanlage ausführen, umfassend die folgenden Schritte:
a) den Steuerungseinheiten (1, 2, 3, 4) wird abhängig von den durch sie auszuführenden Steuerungsaufgaben jeweils eine Priorität zugeordnet,
b) die Steuerungseinheiten (1, 2, 3, 4) kommunizieren während des Betriebs der Windenergieanlage (10) fortlaufend miteinander und/oder mit einer zentralen Kommunikationseinheit,
c) sofern ein Defekt einer ersten Steuerungseinheit (1, 2, 3, 4) der Windenergieanlage (10) eintritt, übernimmt eine zweite Steuerungseinheit (1, 2, 3, 4) der Windenergieanlage (10) die Steuerungsaufgaben der defekten Steuerungseinheit (1, 2, 3, 4), wobei die zweite Steuerungseinheit (1, 2, 3, 4) abhängig von der ihr zugeordneten Priorität ausgewählt wird und die gleiche oder eine niedrigere Priorität besitzt als die defekte Steuerungseinheit (1, 2, 3, 4).

2. Verfahren nach Anspruch 1, **dadurch gekennzeichnet, dass** die zweite Steuerungseinheit (1, 2, 3, 4) vor der Übernahme der Steuerungsaufgaben der defekten Steuerungseinheit (1, 2, 3, 4) eigene Steuerungsaufgaben ausgeführt hat.

3. Verfahren nach Anspruch 2, **dadurch gekennzeichnet, dass** die zweite Steuerungseinheit (1, 2, 3, 4) nach der Übernahme der Steuerungsaufgaben der defekten Steuerungseinheit (1, 2, 3, 4) die zuvor ausgeführten eigenen Steuerungsaufgaben weiterhin ausführt.

4. Verfahren nach Anspruch 2, **dadurch gekennzeichnet, dass** die zweite Steuerungseinheit (1, 2, 3, 4) nach der Übernahme der Steuerungsaufgaben der defekten Steuerungseinheit (1, 2, 3, 4) die zuvor ausgeführten eigenen Steuerungsaufgaben nicht mehr ausführt.

5. Verfahren nach Anspruch 4, **dadurch gekennzeichnet, dass** eine dritte Steuerungseinheit (1, 2, 3, 4) der Windenergieanlage (10) die Steuerungsaufgaben der zweiten Steuerungseinheit (1, 2, 3, 4) übernimmt.

6. Verfahren nach Anspruch 5, **dadurch gekennzeichnet, dass** die dritte Steuerungseinheit (1, 2, 3, 4) abhängig von der ihr zugeordneten Priorität ausgewählt wird und die gleiche oder eine niedrigere Priorität besitzt als die zweite Steuerungseinheit (1, 2, 3, 4).

7. Verfahren nach Anspruch 1, **dadurch gekennzeichnet, dass** die zweite Steuerungseinheit (1, 2, 3, 4) eine Ersatzsteuerungseinheit ist, die vor der Übernahme der Steuerungsaufgaben der defekten Steuerungseinheit (1, 2, 3, 4) keine eigenen Steuerungsaufgaben ausgeführt hat.

8. Verfahren nach einem der vorhergehenden Ansprüche, **dadurch gekennzeichnet, dass** einer ersten Steuerungseinheit (1, 2, 3, 4) nach der Übernahme der Steuerungsaufgaben einer zweiten Steuerungseinheit (1, 2, 3, 4) mit höherer Priorität solange die höhere Priorität der zweiten Steuerungseinheit (1, 2, 3, 4) zugeordnet wird, wie sie die Steuerungsaufgaben der zweiten Steuerungseinheit (1, 2, 3, 4) ausführt.

9. Verfahren nach einem der vorhergehenden Ansprüche, **gekennzeichnet durch** den weiteren Verfahrensschritt (b) des Anspruchs 11.

10. Verfahren nach Anspruch 9, **gekennzeichnet durch** die weiteren Verfahrensschritte mindestens eines der Ansprüche 12 bis 15.

11. Verfahren zur Steuerung einer Windenergieanlage mit mehreren Steuerungseinheiten, die Steuerungsaufgaben innerhalb der Windenergieanlage ausführen, umfassend die folgenden Schritte:
a) die Steuerungseinheiten (1, 2, 3, 4) kommunizieren während des Betriebs der Windenergieanlage (10) fortlaufend miteinander und/oder mit einer zentralen Kommunikationseinheit,
b) sofern ein Defekt einer ersten Steuerungseinheit (1, 2, 3, 4) der Windenergieanlage (10) eintritt, übernimmt eine zweite Steuerungseinheit (1, 2, 3, 4) der Windenergieanlage (10), die zuvor eigene Steuerungsaufgaben ausgeführt hat, die Steuerungsaufgaben der defekten Steuerungseinheit (1, 2, 3, 4), wobei die zweite Steuerungseinheit (1, 2, 3, 4) abhängig davon ausgewählt wird, ob sie eine ausreichende Kapazität zur Ausführung der Steuerungsaufgaben der defekten Steuerungseinheit (1, 2, 3, 4) zusätzlich zu ihren eigenen Steuerungsaufgaben besitzt, und die zweite Steuerungseinheit (1, 2, 3, 4) nachfolgend sowohl ihre eigenen Steuerungsaufgaben als auch die Steuerungsaufgaben der defekten Steuerungseinheit (1, 2, 3, 4) ausführt.

12. Verfahren nach einem der Ansprüche 1 bis 11, **dadurch gekennzeichnet, dass** mindestens eine Steuerungseinheit (1, 2, 3, 4) mindestens ein Steuerungsprogramm zur Ausführung der Steuerungsaufgaben mindestens einer anderen Steuerungseinheit (1, 2, 3, 4) der Windenergieanlage (10) aufweist.

13. Verfahren nach einem der Ansprüche 1 bis 11, **dadurch gekennzeichnet, dass** die Steuerungseinheiten (1, 2, 3, 4) ein Steuerungsprogramm zur Ausführung der Steuerungsaufgaben einer anderen Steuerungseinheit (1, 2, 3, 4) nach Bedarf von einer zentralen Kommunikationseinheit abrufen, bevor sie die Steuerungsaufgaben der anderen Steuerungseinheit (1, 2, 3, 4) übernehmen.

14. Verfahren nach einem der vorhergehenden Ansprüche, **dadurch gekennzeichnet, dass** die Steuerungseinheiten (1, 2, 3, 4) mit einer zentralen Kommunikationseinheit kommunizieren und die zentrale Kommunikationseinheit die Zuordnung der Steuerungsaufgaben zu den Steuerungseinheiten (1, 2, 3, 4) im Fall eines Defekts einer Steuerungseinheit (1, 2, 3, 4) durchführt.

15. Verfahren nach einem der Ansprüche 1 bis 13, **dadurch gekennzeichnet, dass** die Steuerungseinheiten (1, 2, 3, 4) miteinander kommunizieren und die Zuordnung der Steuerungsaufgaben zu den Steuerungseinheiten (1, 2, 3, 4) im Fall eines Defekts einer Steuerungseinheit (1, 2, 3, 4) automatisch entsprechend einer vorher festgelegten Reihenfolge erfolgt.
